# EUROPÄISCHE PATENTSCHRIFT

(11) **EP 1 422 106 B1**
(45) Veröffentlichungstag und Bekanntmachung des Hinweises auf die Patenterteilung: **08.10.2008**
(21) Anmeldenummer: 02102612.5
(22) Anmeldetag: 21.11.2002
(51) Int. Cl.: B60P 7/08, B60P 1/00

(54) **Sicherungseinrichtung für Ladegut**
Securing device for load
Dispositif de sécurisation de charge

(43) Veröffentlichungstag der Anmeldung: 26.05.2004
(73) Patentinhaber: Ford Global Technologies, LLC, Dearborn, MI 48126 (US)
(72) Erfinder: Tropp, Axel Erwin, 53639 Königswinter (DE)
(74) Vertreter: Drömer, Hans-Carsten

(56) Entgegenhaltungen:
- DE-A- 10 013 972
- DE-A- 10 055 674
- DE-C- 19 514 193
- DE-C- 19 546 025

## Beschreibung

Die Erfindung betrifft eine Sicherungseinrichtung für Ladegut in einem Fahrzeug gemäß dem Oberbegriff des Anspruches 1.

Aus der DE 195 14 193 ist eine Sicherungseinrichtung nach dem Oberbegriff des Anspruchs 1 bekannt, bei der auf dem Ladeboden eines Fahrzeuges Leisten zur Auflage des Ladegutes angebracht sind. Zwischen den Leisten verlaufen aufpumpbare Hohlprofile aus rutschfestem Material, die im aufgepumpten Zustand das Ladegut gegen Verrutschen sichern, indem sie von unten gegen das Ladegut drücken. Nachteilig ist hier, daß die Sicherungseinrichtung fest mit dem Ladeboden verbunden ist und dadurch nicht einfach entfernt werden kann, wenn z. B. die Sicherungseinrichtung nicht auf dem Ladeboden gebraucht wird, oder zu Reparaturzwecken. Zudem ist die Herstellung aufwendig, da Leisten und Hohlprofile im Ladeboden verlegt werden müssen.

Eine Transportsicherungsplatte ist aus der DE 195 46 025 bekannt. Die Platte wird auf den Laderaumboden eines Fahrzeuges gelegt und ermöglicht aufgrund ihrer ebenen Oberseite auf einfache Weise ein Verschieben des Ladegutes. In längslaufenden Vertiefungen ist ein aufpumpbarer Schlauch aus rutschhemmendem Material angeordnet, der, sobald aufgepumpt, das Ladegut gegen Verrutschen sichert, indem er ebenfalls wie oben beschrieben gegen das Ladegut drückt. Die Transportsicherungsplatte kann aus dem Fahrzeug bei Bedarf entfernt werden. Da die gesamte Platte recht massiv und steif ist, läßt sich die Platte nur sehr schwierig in das bzw. aus dem Fahrzeug verbringen. Zudem weist die Platte insgesamt auch ein hohes Gewicht auf.

Aufgabe der Erfindung ist es, eine Sicherungseinrichtung so weiterzuentwickeln, daß sie weniger Gewicht aufweist, für den Benutzer leichter handzuhaben ist und einfacher herzustellen ist.

Gelöst wird diese Aufgabe mit den Merkmalen des Anspruchs 1

Indem die Leisten und die Kanäle mit einer flexiblen Matte verbunden sind, ist die Sicherungseinrichtung für den Benutzer leicht handzuhaben. Als Material für die flexible Matte eignet sich z. B. elastischer Kunststoff, der auch aufgeschäumt sein kann, Gummi, textiles Gewebe, Gewirke wie Filz, und jedes andere flexible Material. All diese Werkstoff weisen oder können, da die Matte flexibel sein soll, ein geringes spezifisches Gewicht aufweisen, wodurch die Matte insgesamt sehr leicht wird. Aufgrund der Flexibilität der Matte vereinfacht sich auch die Handhabung für den Benutzer, wenn er die Matte aus einem bzw. in ein Fahrzeug verbringt. Z. B. kann die Matte auf den Ladeboden eines engen Kofferraum von einem Benutzer verbracht werden, indem er die Matte außerhalb des Fahrzeuges zusammenrollt und diese erst im Kofferraum ausrollt. Da die Leisten und Kanäle Bestandteil der Matte bzw. fest mit dieser verbunden sind, kann die Matte auf einfache Weise separat vom Fahrzeug hergestellt werden, wodurch die aufwendige Verlegung von Leisten und Kanälen auf dem Laderaumboden eines Fahrzeuges entfällt. Auch muß nicht jedes Fahrzeug mit dieser Matte ausgerüstet werden, sie eignet sich gut zur Nachrüstung in bestehenden Fahrzeugen.

Das Aufpumpen der Kanäle zur Sicherung des Ladegutes kann wie aus dem Stand der Technik bekannt, durch eine beliebige Pumpe erfolgen, die mittels einer Anschlußleitung mit den Kanälen verbunden wird. Als Arbeitsmedium kommt im wesentlichen Luft in Frage, prinzipiell ist es aber auch möglich, die Kanäle mit einem anderen Gas oder einer geeigneten Flüssigkeit aufzupumpen. Gesteuert wird die Pumpe z. B. durch Schließen des Kofferraumdeckels, durch Starten des Fahrzeugmotors, oder bewußt vom Benutzer veranlaßt.

In einer bevorzugten Ausführung der Erfindung sind zumindest ein Teil der Leisten auf der Matte befestigt. Die Leisten sind dabei aus einem geeigneten Material wie Kunststoff, Leichtmetall, Holz o. ä. gefertigt und durch ein geeignetes Fügeverfahren wie Kleben, Schweißen, Eingießen oder Einspritzen, Nieten, Schrauben oder Formschluß mit der Matte verbunden. Zumindest ein Teil der Leisten durch die Matte selbst gebildet sein, indem z. B. bei einer aus Kunststoff gespritzten Matte die Leisten sich als Erhebungen von der Oberseite der Matte abheben. Dabei kann eine Matte sowohl zusätzlich befestigte Leisten als auch Leisten aufweisen, die durch die Matte selbst gebildet sind.

Bevorzugt ist zumindest die Oberseite der Leisten aus einem Material mit niedrigem Reibungswert gebildet ist. Der niedrige Reibungswert erlaubt ein leichtes Verschieben des Ladegutes auf den Leisten selbst, wenn die Kanäle nicht aufgepumpt sind. Im Falle der auf der Matte befestigten Leisten kann der niedrige Reibungswert erreicht werden, indem die Leisten selbst aus einem Material geringer Reibung bestehen, z. B. aus Teflon (registriertes Markenzeichen). Sind die Leisten aus der Matte selbst gebildet, so werden die Leisten nur an ihrer Oberseite mit einem solchen Material beschichtet, indem das Material auf die Leisten aufgeklebt, aufgestrichen, aufgespritzt o. ä. wird. Wobei diese Auftragung des Materials mit niedrigem Reibungswert auch für die separaten Leisten benutzt werden kann, indem z. B. eine Holzleiste mit einer Kunststoffbeschichtung versehen wird.

In einer weiteren Ausführung der Erfindung sind zumindest ein Teil der Kanäle durch die Matte selbst gebildet. Dies kann der Fall sein, wenn die Matte z. B. aus einem elastischen Kunststoff oder einem Gummi gefertigt ist. Dann lassen sich diese Kanäle leicht in die Matte selbst integrieren. Durch geeignete Abstimmung der Mattendicke und der Dicke der benachbarten Leisten ragt dann im aufgepumpten Zustand die Oberseite der Matte im Bereich dieser Kanäle über die Oberseite der benachbarten Leisten, so daß die Matte selbst am Ladegut anliegt.

Zumindest ein Teil der Kanäle oder alle Kanäle können durch separate Schläuche gebildet sein. Diese verlaufen dann auf der Oberseite der Matte, bevorzugt in Vertiefungen der Matte, derart, daß im nicht-aufgepumpten Zustand die Oberseite der Schläuche niedriger liegen als die Oberseiten benachbarter Leisten. Bevorzugt ist dabei die Oberseite der Schläuche aus einem Material mit hohem Reibwert gebildet. Wenn die Schläuche im aufgepumpten Zustand am Ladegut anliegen, wird durch den hohen Reibwert eine sichere Fixierung des Ladegutes erreicht.

In einer weiteren Ausführung können die Schläuche zumindest teilweise in der Matte verlaufen. Dies ist der Fall, wenn die Matte selbst z.B. aus einem luftdurchlässigen Material besteht, oder das Material ist nicht genügend dehnbar, oder weist nicht ausreichende Festigkeit auf, um dem Druck in Kanälen im aufgepumpten Zustand zu widerstehen. Die Transportsicherung wird hier erreicht, indem Schläuche, Matte und Leisten so angeordnet sind, daß im nicht-aufgepumpten Zustand die Oberseite der Matte im Bereich der Schläuche nicht mit dem Ladegut in Verbindung kommt, während im aufgepumpten Zustand die Oberseite der Matte im Bereich der Schläuche am Ladegut anliegt bzw. sich diese Oberseite über die Oberseite der Leisten erhebt.

Bevorzugt ist die Oberseite der Matte im Bereich von Kanäle oder Schläuchen, die in der Matte verlaufen, zumindest teilweise aus einem Material mit hohem Reibwert gebildet ist. Dies kann erreicht werden, indem ein Material mit hohem Reibwert aufgeklebt, aufgespritzt wird, oder die Matte besteht in diesem Bereich aus einem derartigen Material. Damit wird sichergestellt, wenn diese Oberseite am Ladegut anliegt, das Ladegut durch den hohen Reibwert besser gegen Verrutschen gesichert ist.

In allen Fällen ist es vorteilhaft, wenn die Unterseite der Matte zumindest teilweise ein Material mit einem hohen Reibwert aufweist. Dies kann wie bereits oben beschrieben erfolgen, indem entweder ein geeignetes Material auf die Matte aufgebracht wird, oder die Matte selbst zumindest bereichsweise aus einem derartigen Material besteht.

Weitere vorteilhafte Ausgestaltungen der Erfindung sind den folgenden Zeichnungen zu entnehmen. Es zeigen:
- Fig. 1: einen Schnitt durch eine Sicherungseinrichtung mit Ladegut;
- Fig. 2: einen Teilschnitt durch einen Sicherungseinrichtung nach Fig. 1;
- Fig. 3: einen Teilschnitt durch eine weitere Sicherungseinrichtung mit in der Matte integrierten Kanälen;
- Fig. 4: einen Teilschnitt durch eine weitere Sicherungseinrichtung mit in der Matte verlaufenden Schläuchen; und
- Fig. 5: einen Teilschnitt durch eine weitere Sicherungseinrichtung mit in der Matte integrierten Leisten und Kanälen.

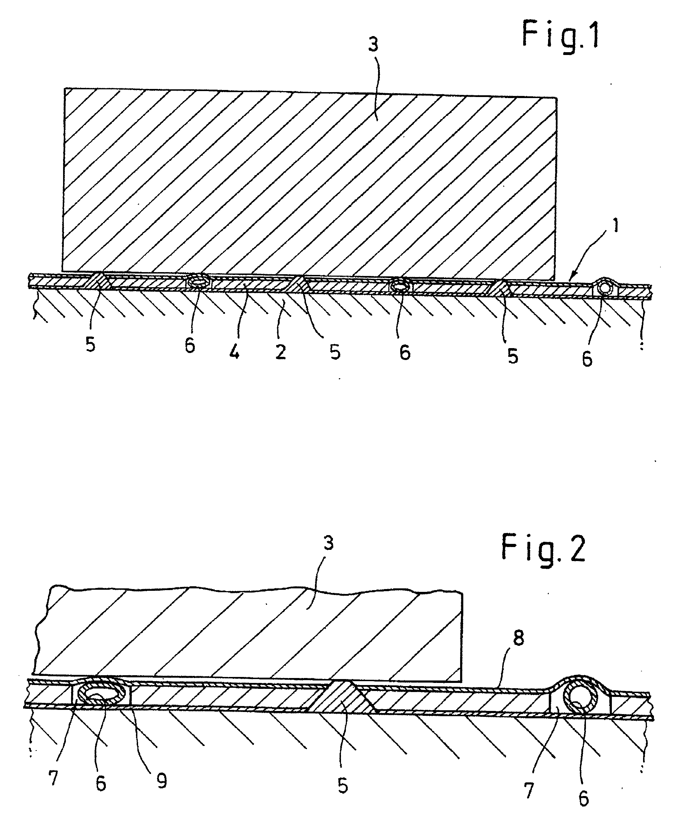

In Figur 1 die Sicherungseinrichtung 1 gezeigt, die auf einem Laderaumboden 2 aufliegt, und das Ladegut 3, welches mittels der Sicherungseinrichtung 1 gegen Verrutschen gesichert wird. Die Sicherungseinrichtung 1 besteht im wesentlichen aus einer flexiblen Matte 4, mehren parallel laufenden Leisten 5 und aufpumparen Schläuchen 6, wobei die Schläuche 6 in Hohlräumen 7 der Matte 4 angeordnet sind.

Ein vergrößerter Ausschnitt der Sicherungseinrichtung 1 aus Fig. 1 ist in Fig. 2 dargestellt. Das Grundmaterial der Matte 4 besteht aus einem aufgeschäumten, elastischen Kunststoff, der mit den Leisten 5 fest verbunden ist. Die Hohlräume 7, die die Schläuche 6 aufnehmen, entstehen, indem die Matte 4 an dieser Stelle unterbrochen ist. Festgehalten werden die Schläuche 6, indem die Matte 4 an Oberseite und an Unterseite jeweils mit rutschfesten Schichten 8, 9, die aus einem Material mit hohem Reibwert bestehen, versehen ist, wobei die Schichten 8, 9 sich über die Hohlräume 7 hinweg erstrecken. Als Material für die Schichten 8, 9 eignet sich z. B. Gummi.

Im nicht-aufgepumpten Zustand liegt die Oberseite der rutschhemmenden Schicht 8 unterhalb der Oberseite der Leisten 5, die aus einem Material mit geringem Reibungswert gefertigt sind. Dadurch kann das auf der Sicherungseinrichtung 1 befindliche Ladegut 3 von einem Benutzer relativ leicht auf den Leisten 5 verschoben werden. Zur Transportsicherung werden die Schläuche 6 aufgepumpt. In Bereichen, wo das Ladegut sich über den aufgepumpten Schläuchen 6 befindet, legt sich die rutschfeste Schicht 8 am Ladegut 3 an und verhindert somit ein leichtes Verrutschen des Ladegutes 3. Daran ist auch die an der Unterseite der Matte 4 befindliche rutschfeste Schicht 9 beteiligt, die ein Verrutschen der Sicherungseinrichtung 1 gegenüber dem Laderaumboden 2 verhindert.

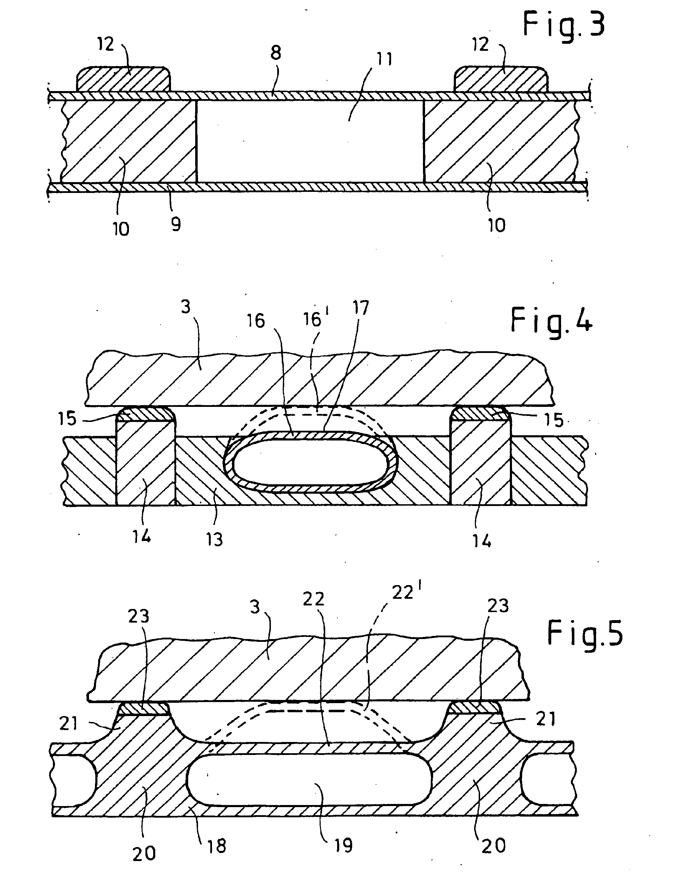

Einen Teilschnitt einer weiteren Sicherungseinrichtung zeigt Fig. 3. Die Matte 10 ist an der Ober- und Unterseite jeweils mit einer rutschhemmenden Schicht 8, 9 versehen. Aufpumpbare Kanäle 11 sind gebildet, indem die Matte 10 abschnittsweise unterbrochen ist, die Schichten 8, 9 jedoch durchgehen, und die Schichten 8, 9 luftundurchlässig sind. Bei dieser Ausführung kann auf Schläuche verzichtet werden; beim Aufpumpen wird die Druckluft direkt den Kanälen 11 zugeführt. Damit im nicht-aufgepumpten Zustand das Ladegut 3 leicht verschoben werden kann, sind parallel zu den Kanälen 11 Leisten 12 aus einem Material mit niedrigem Reibungswert auf der Matte 4 befestigt, bevorzugt aufgeklebt.

Eine andere erfindungsgemäße Ausführung ist in Fig. 4 dargestellt. Die flexible Matte 13 verbindet die Leisten 14, die auf ihrer Oberseite mit einer rutschfähigen Beschichtung 15, d. h. eine Beschichtung aus einem Material mit niedrigem Reibwert, versehen sind. Aufpumpbare Schläuche 16 sind direkt in die Matte 13 eingebracht, z. B. durch Eingießen, wobei ihre Oberseite 17 nicht von der Matte 13 bedeckt ist, sondern so daß im aufgepumpten Zustand der Schlauch 16' direkt am Ladegut 3 anliegt.

Eine weitere Sicherungseinrichtung zeigt Fig. 5, bei der in die Matte 18 sowohl aufpumpbare Kanäle 19 als auch Leisten 20 direkt integriert sind, d. h. alles besteht aus einem Material, bevorzugt ein elastischer Kunststoff oder Gummi. Die Leisten 20 werden gebildet, indem an dieser Stelle das Material massiv eingebracht ist, und sich die Oberseiten 21 der Leisten 20 über das Niveau der Oberseite 22 im Bereich der Kanäle 19 erhebt. Die Kanäle 19 entstehen, indem zwischen den Leisten 20 Hohlräume gebildet werden, die gegenüber der Umgebung luftdicht abgeschlossen sind und somit unter Druck gesetzt werden können. Werden die Kanäle 19 unter Druck gesetzt bzw. aufgepumpt, schmiegt sich die Oberseite 22' an das Ladegut 3 an. Wenn die Matte 18 aus einem rutschfestem Material gefertigt ist, ist keine weitere Beschichtung der Oberseite 22 notwendig, ansonsten kann im Bereich der Kanäle 19 zusätzlich eine rutschhemmende Schicht aufgebracht werden. Im Bereich der Leisten 20 dagegen weist die Oberseite der Leisten 20 eine rutschende Beschichtung 23, d. h. mit niedrigem Reibwert, auf, damit im nicht-aufgepumpten Zustand das Ladegut leicht verschoben werden kann.

## Patentansprüche

1. Sicherungseinrichtung für Ladegut in einem Fahrzeug, mit Leisten (5, 12, 14, 20) zur Auflage des Ladegutes (3), und mit aufpumpbaren Kanälen (6, 11, 16, 19) aus elastischem Material, die zumindest teilweise zwischen den Leisten (5, 12, 14, 20) verlaufen, wobei die Kanäle (6, 11, 16, 19) im aufgepumpten Zustand das Ladegut (3) gegen Verrutschen sichern,
**dadurch gekennzeichnet, daß**
die Leisten (5, 12, 14, 20) und die Kanäle (6, 11, 16, 19) mit einer flexiblen Matte (4, 10, 13, 18) verbunden sind.

2. Sicherungseinrichtung nach Anspruch 1,
**dadurch gekennzeichnet, daß**
Leisten (12) auf der Matte (10) befestigt sind.

3. Sicherungseinrichtung nach Anspruch 1,
**dadurch gekennzeichnet, daß**
Leisten (20) durch die Matte (18) selbst gebildet sind.

4. Sicherungseinrichtung nach Anspruch 1, 2 oder 3,
**dadurch gekennzeichnet, daß**
die Leisten (5, 12, 14, 20) zumindest auf Oberseite (21) ein Material mit niedrigem Reibungswert aufweisen.

5. Sicherungseinrichtung nach einem der vorherigen Ansprüche,
**dadurch gekennzeichnet, daß**
Kanäle (11, 19) durch die Matte selbst gebildet sind.

6. Sicherungseinrichtung nach einem der vorherigen Ansprüche,
**dadurch gekennzeichnet, daß**
**dadurch gekennzeichnet, daß**
Kanäle durch separate Schläuche (6, 16) gebildet sind.

7. Sicherungseinrichtung nach Anspruch 6,
**dadurch gekennzeichnet, daß**
zumindest die Oberseite der Schläuche (6, 16) aus einem Material mit hohem Reibwert gebildet ist.

8. Sicherungseinrichtung nach Anspruch 6 oder 7,
**dadurch gekennzeichnet, daß**
die Schläuche (6) zumindest teilweise in der Matte (4) verlaufen.

9. Sicherungseinrichtung nach Anspruch 5 oder 8,
**dadurch gekennzeichnet, daß**
im Bereich der Kanäle (11, 19) bzw. Schläuche (6) die Oberseite (8, 22) der Matte (4, 10, 18) zumindest teilweise aus einem Material mit hohem Reibwert gebildet ist.

10. Sicherungseinrichtung nach einem der vorherigen Ansprüche,
**dadurch gekennzeichnet, daß**
die Unterseite (9) der Matte (4, 10) zumindest teilweise ein Material mit einem hohen Reibwert aufweist.

## Claims

1. Securing device for a load in a vehicle, with ridges (5, 12, 14, 20) for supporting the load (3), and with inflatable channels (6, 11, 16, 19) which are made of elastic material and at least partially run between the ridges (5, 12, 14, 20), wherein, in the inflated state, the channels (6, 11, 16, 19) secure the load (3) against slipping, **characterized in that** the ridges (5, 12, 14, 20) and the channels (6, 11, 16, 19) are connected to a flexible mat (4, 10, 13, 18).

2. Securing device according to Claim 1, **characterized in that** ridges (12) are fixed on the mat (10).

3. Securing device according to Claim 1, **characterized in that** ridges (20) are formed by the mat (18) itself.

4. Securing device according to Claim 1, 2 or 3, **characterized in that** the ridges (5, 12, 14, 20) at least on the upper side (21) have a material with a low coefficient of friction.

5. Securing device according to one of the preceding claims, **characterized in that** channels (11, 19) are formed by the mat itself.

6. Securing device according to one of the preceding claims, **characterized in that** channels are formed by separate tubes (6, 16).

7. Securing device according to Claim 6, **characterized in that** at least the upper side of the tubes (6, 16) is formed from a material with a high coefficient of friction.

8. Securing device according to Claim 6 or 7, **characterized in that** the tubes (6) at least partially run in the mat (4).

9. Securing device according to Claim 5 or 8, **characterized in that**, in the region of the channels (11, 19) or tubes (6), the upper side (8, 22) of the mat (4, 10, 18) is at least partially formed from a material with a high coefficient of friction.

10. Securing device according to one of the preceding claims, **characterized in that** the lower side (9) of the mat (4, 10) at least partially has a material with a high coefficient of friction.

## Revendications

1. Dispositif de sécurisation de charge dans un véhicule, comprenant des barres (5, 12, 14, 20) servant à supporter la charge (3), et comprenant des canaux pompables (6, 11, 16, 19) en matériau élastique, qui s'étendent au moins en partie entre les barres (5, 12, 14, 20), les canaux (6, 11, 16, 19), dans l'état pompé, empêchant la charge (3) de glisser,
**caractérisé en ce que**
les barres (5, 12, 14, 20) et les canaux (6, 11, 16, 19) sont connectés par un mat flexible (4, 10, 13, 18) .

2. Dispositif de sécurisation selon la revendication 1,
**caractérisé en ce que**
les barres (12) sur fixées sur le mat (10).

3. Dispositif de sécurisation selon la revendication 1,
**caractérisé en ce que**
les barres (20) sont formées par le mat (18) lui-même.

4. Dispositif de sécurisation selon la revendication 1, 2 ou 3,
**caractérisé en ce que**
les barres (5, 12, 14, 20) présentent, au moins sur le côté supérieur (21), un matériau ayant un faible coefficient de frottement.

5. Dispositif de sécurisation selon l'une quelconque des revendications précédentes,
**caractérisé en ce que**
les canaux (11, 19) sont formés par le mat lui-même.

6. Dispositif de sécurisation selon l'une quelconque des revendications précédentes,
**caractérisé en ce que**
les canaux sont formés par des tuyaux (6, 16) séparés.

7. Dispositif de sécurisation selon la revendication 6,
**caractérisé en ce**
**qu'**au moins le côté supérieur des tuyaux (6, 16) est formé d'un matériau ayant un fort coefficient de frottement.

8. Dispositif de sécurisation selon la revendication 6 ou 7,
**caractérisé en ce que**
les tuyaux (6) s'étendent au moins en partie dans le mat (4).

9. Dispositif de sécurisation selon la revendication 5 ou 8,
**caractérisé en ce que**
dans la région des canaux (11, 19) ou des tuyaux (6), le côté supérieur (8, 22) du mat (4, 10, 18) est formé au moins en partie d'un matériau ayant un fort coefficient de frottement.

10. Dispositif de sécurisation selon l'une quelconque des revendications précédentes,
**caractérisé en ce que**
le côté inférieur (9) du mat (4, 10) présente au moins en partie un matériau ayant un fort coefficient de frottement.
